# EUROPEAN PATENT SPECIFICATION

(11) **EP 0 421 492 B1**
(45) Date of publication and mention of the grant of the patent: **20.07.1994**
(21) Application number: 90125434.2
(22) Date of filing: 14.03.1986
(51) Int. Cl.: H02K 15/00

(54) **Production line for and method of processing pallet-mounted electric motor stators**
Produktionslinie für auf Palette montierte Ständer elektrischer Motoren und Verfahren zur Herstellung solcher Ständer.
Ligne de production pour stators de moteur électrique montés sur palette et procédé de fabrication de tels stators

(30) Priority: 11.07.1985 IT 2153285; 21.10.1985 IT 5395485 U; 21.10.1985 IT 5395585 U
(43) Date of publication of application: 10.04.1991
(62) Divisional of application: 86200411.6
(73) Proprietor: AXIS S.p.A., I-50028 Tavarnelle Val di Pesa (Firenze) (IT)
(72) Inventor: Santandrea, Luciano, I-50028 Tavarnelle Val di Pesa (Firenze) (IT); Luciani, Sabatino, I-50019 Sesto Fiorentino (Firenze) (IT)
(74) Representative: Lotti, Giorgio

(56) References cited:
- FR-A- 2 530 888
- GB-A- 2 145 355
- PATENT ABSTRACTS OF JAPAN vol. 4, no. 83 (E-15)14 June 1980 ; & JP-A-55 049 957 (HITACHI) 11 April 1980

## Description

The invention relates to a production line for pallet-mounted electric motor stators.

At the present time, stators lie directly on pallets on conveyor belts which move along lines. The various working stations are provided at the sides of these lines. These stations include the stations for slot insulation, mounting the shoulders and mounting the terminals on them, winding formation, wire end termination, terminal soldering, coil baking, and stator electrical testing.

On reaching one of these stations, the stators must be removed from the conveyor belt and positioned in the working station, after which the stator is again returned to the line for feeding to the next station.

This type of production cycle considerably penalizes productivity, as the stators have to be continuously transferred to and from the various working stations by respective members which remove them from the pallets on the belts, transport them to the station, return them to the pallets on the belts and position them thereon.

The members, which are complicated, also penalize the line from an economic viewpoint.

Document GB-A-2145355 relates to an apparatus and method for the automatic production of armatures for small electric motors. The armatures are clamped in work piece holders and are moved to successive stations of the apparatus by a conveyor belt. The work piece holders are raised in relation to the conveyor belt by positioning a locking bolt and are held in the working position.

However, in this apparatus the armatures are mounted on the work piece holders with vertical axis and the work piece holder is not provided with means arranged to temporarily receive the ends of wire windings.

The production lines for processing stators and armatures are, indeed, quite different from each other and the problems to be overcome in the two fields require different solutions.

To obviate the drawback of the known production lines for electric motor stators, as above indicated, the invention provides a line in which the stators are mounted with their axis horizontal and perpendicular to the direction of travel of the line on cradle-shape portions of pallets which move with the conveyor belt. In certain stations, such as the winding formation and termination stations, the pallet is raised together with the stator so that it can be positioned in relation to the machine which is to carry out the necessary work. By this means, the idle times involved in transferring the stator to and from the various working stations can be considerably reduced.

In certain stations these transfers are not required as the required work is carried out directly on the stator without removing the pallet from the belts.

By this means, the idle times involved in transferring the stator to and from the various working stations can be considerably reduced, because in certain station these do not arise and in other stations it is simply a matter of raising the pallet on which the stator is fixed.

In addition to increasing productivity, equipment costs and the complexity of the entire line is also reduced.

The above and further objects which will be more apparent hereinafter are attained according to the invention by a production line for electric motor stators, as claimed in claim 1.

An embodiment of the invention is described hereinafter by way of a non-limiting example with reference to the accompanying drawings in which:

Figure 1 is a cross-section of a transfer line for the transfer of pallets which carry stators mounted thereon with their axis extending in a horizontal direction, wherein said cross-section is made at a processing station and at respective devices for positioning the pallets in relation to said station.

Figure 2 is a view in the direction of the arrow A of Fig. 1.

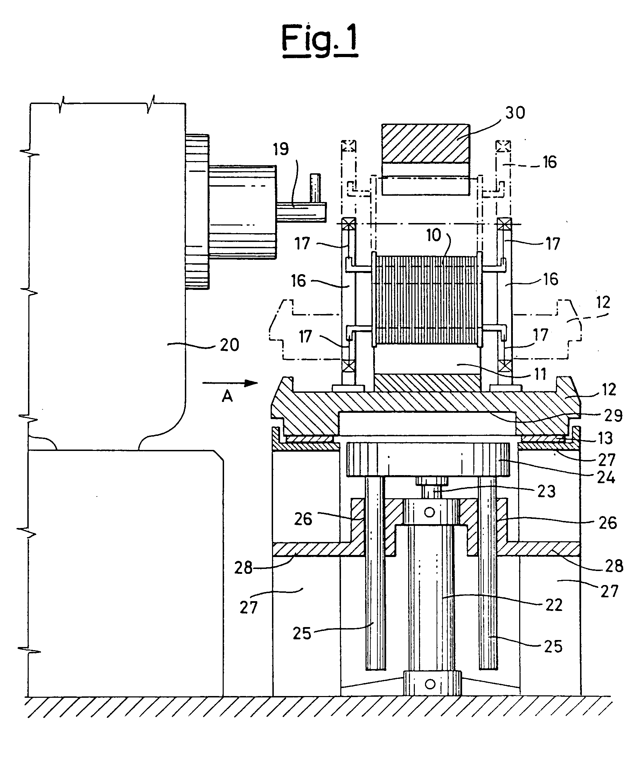

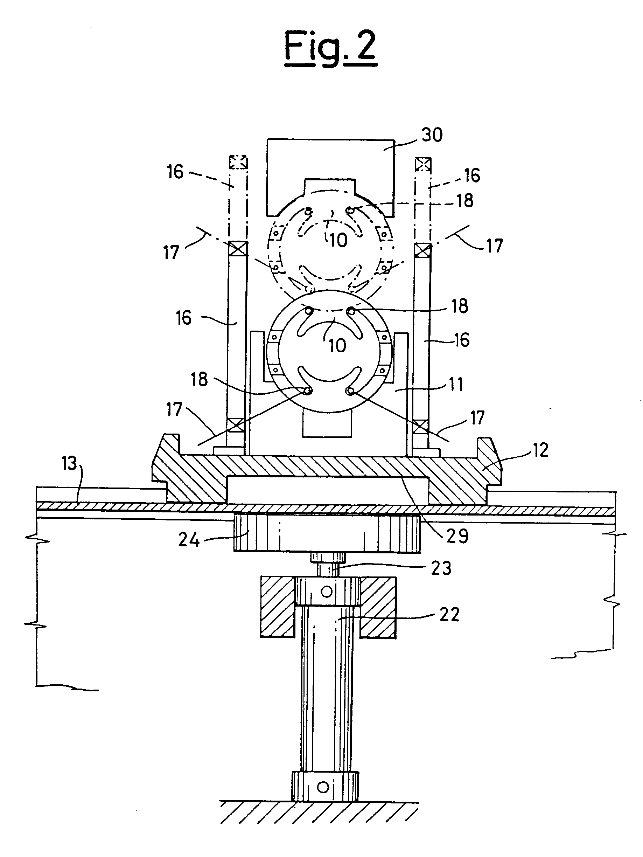

Figure 1 and 2 show a stator 10 of conventional type, mounted, with its axis extending in a horizontal direction, on a cradle-shape portion of a cylindrical hollow body 11 anchored at its lower portion on a base 12. The base 12 and the body 11 form the pallet which slides on the belts 13 of the transfer line.

Stator 10 is mounted on the body 11, at the side of which there are provided appendices 16 intended to ensure the temporary anchorage of the ends of the wires 17 after windings 18 have been formed on the slots of the stator.

Figure 1 shows the station for forming the windings 18, which is disposed at the side of the line 13 and operates along a horizontal axis.

In the embodiment shown diagrammatically in Fig. 1, a needle 19 is disposed eccentrically and is able to provide windings without the aid of the conventional forming shoes. This construction of the eccentric needle has formed the subject-matter of the italian patent No. 1200443 of April 2, 1985, in the name of the present Applicant.

This technical solution and a second technical solution (not shown) with movable needles which has formed the subject-matter of the italian patent No. 1185206 of July 9, 1985, allows winding without the use of forming shoes. Therefore, they could advantageously be employed on the line forming the subject-matter of the present patent application, inasmuch as the use of forming shoes and, hence, conventional equipment for forming the windings on the stator, could render difficult the processing on stators anchored on pallets. However, suitable modifications of the configuration of the pallet could allow using equipments 20 of a type different from the one shown in Fig. 1 or from the one which has been advantageously proposed by the Applicant, without departing from the scope of the present invention which absolutely does not aim to provide a method for forming the windings.

In known manner, when the windings are finished, the ends of the wires 17 are temporarily anchored on side supports to the stator 10, which in this case are the pallet appendixes 16.

Thus, the stator 10 is disposed on the pallet, with its axis extending in a horizontal direction. In a preceding upstream station it could have been disposed with its axis extending vertically on another pallet, in which case a simple device (not shown) would produce rotation and arrangement of the stator into the present position on the cylindrical hollow body 11.

In turn, the stator travels on the pallet along the line always keeping this position with the axis extending horizontally, and all the processing stations, and not only the winding station described herein, are arranged in such a manner as to able to work thereon in such position.

Since not all the stator working stations can be positioned at the level of the advancing stator, it is necessary to be able to raise the pallet with the stator on it vertically from the conveyor belt 13 in order to reach a position corresponding to the working station itself.

The device which produces the vertical transfer of the pallet is formed, by way of example, by a cylinder 22 whose piston rod 23 is rigidly connected to a fork 24 provided with bars 25 which slide in guides 26 of a support 28 fixed to the frame 27 on which the conveyer belts 27 slide. Cylinder 22 also is rigidly connected to the support 28 screwed to the frame 27.

The extention of the rod 23 of the cylinder 22 causes the bars 25 to slide upwards with an initial restraining of the fork 24 into the cavity 29 of the pallet and its successive detachment from the conveyer belts 13 and transfer towards the winding needle 21 until reaching the position shown by dashed lines in Fig. 1, in which the stator 10 abuts at its upper part against a fixed V-shaped locking and reference striker 30.

After termination of the winding process, cylinder 22 is actuated in the opposite direction and the pallet returns to rest on the conveyer belts 13 in order to be transferred into the succeeding station which usually is the termination station in which the ends of the wires 17 are manipulated for the definitive anchorage to the terminals of the stator and then the exceeding portions are cut away.

## Claims

1. A production line for electric motor stators, which production line includes a plurality of stator-working stations (20) therein, and conveyor belt means (13) in proximity to the stator-working stations (20) for advancing the stators (10) from station to station; a plurality of pallets (12), individually supporting said stators (10) thereon during movement of said stators from station to station (20); characterized in that the stators (10) are processed while mounted on the respective pallets, (12), which pallets include a hollow body (11) having a cradle-shaped portion thereon, within which the stator (10) is arranged with its axis horizontal and perpendicular to the direction of travel of the belt means.

2. A production line for electric motor stators according to claim 1 characterized in that appendices (16), extending from said pallet (12) are arranged to temporarily receive the ends of wire windings (17) formed on the stator (10) at one of the stator-working stations (20).

3. A production line for electric motor stators according to claim 1 characterized in that in the stator-working stations (20) means (30) are provided for rigidly fixing the stators (10) on the pallets (12).

4. A production line for electric motor stators according to claim 1 characterized in that mechanical means (22-29) are provided in proximity to the stator-working stations (20) for raising said pallets (12) together with the stators from the conveyor belt means (13) for translating said pallets so that the respective stators become disposed in positions corresponding with the working stations (20) located along the production line.

5. A production line for electric motor stators, according to claim 4 characterized in that said mechanical means (22, 29) include a cylinder (22) positioned below the conveyor belt means (13), a stem (23) operated by the cylinder (22) and fork (24) rigidly connected to said stem (23) and engageable with said pallet (12) for translating the latter upon actuation of said cylinder (22).

6. A line as claimed in claims 4 and 5 characterized in that the said fork (24) includes a pair of spaced arms (25), said conveyor belt means (13) includes a frame (28) having guides (26) therein, said arms (25) of the fork (24) slide in said guides (26) of the frame (28) of the conveyor belt means (13) and said cylinder (22) is rigidly connected to said frame (28).

7. Method for processing electric motor stators along a production line including a plurality of stator-working stations (20) therein, and conveyor belt means (13) in proximity to the stator-working stations (20) for advancing the stators (10) from station to station; the method being characterized by the following steps:
a) supporting each stator (10), with its axis horizontal, on a cradle-shape portion of a hollow body (11) of a respective pallet (12);
b) positioning said pallet (12) in relation to the stator-working stations (20), with the mounted stator (10) having its axis horizontal and perpendicular to the direction of travel of the belt means;
c) processing said stator (10) mounted on said pallet (12) in said stator-woking stations (20).

8. Method according to claim 7 characterized in that at least during step c) the stator (10) is rigidly fixed to the pallet (12) by means (30).

9. Method according to claim 7 characterized in that step b) is carried out by raising said pallet (12) with the stator from the conveyor belt means (13) for translating said pallet so that the respective stator (10) become disposed in position corresponding with the working stations (20).

10. Method according to claim 7 characterized in that during step c) the ends of wire windings (17) formed on the stator (10) at one of the stator-working stations (20) are temporarily anchored to appendices (16) extending from said pallet (12).

## Patentansprüche

1. Produktionslinie für Statoren für Elektromotoren, die Produktionslinie umfaßt darin: eine Vielzahl von Stationen (20) zur Statorbearbeitung und Förderbandmittel (13) in der Nähe der Stationen (20) zur Statorbearbeitung für das Zuführen der Statoren (10) von Station zu Station; eine Vielzahl von Paletten (12), die die Statoren (10) während des Transportes der Statoren von Station zu Station (20) einzeln auf ihnen tragen; dadurch gekennzeichnet, daß die Statoren (10) gefertigt werden, währenddessen sie auf den entsprechenden Paletten (12) befestigt sind, diese Paletten weisen einen hohlen Körper (11) auf, der auf demselben einen wiegenförmigen Abschnitt aufweist, in dem der Stator (10) mit seiner Achse in horizontaler Richtung und senkrecht zur Transportrichtung der Förderbandmittel angeordnet ist.

2. Produktionslinie für Statoren für Elektromotoren nach Anspruch 1, dadurch gekennzeichnet, daß Fortsätze (16), die sich von der Palette (12) erstrecken, so angeordnet sind, daß sie die Enden der Drahtwicklungen (17) vorübergehend aufnehmen, die auf dem Stator (10) an einer der Stationen (20) zur Statorbearbeitung geformt werden.

3. Produktionslinie für Statoren für Elektromotoren nach Anspruch 1, dadurch gekennzeichnet, daß in den Stationen (20) zur Statorbearbeitung Mittel (30) zum starren Befestigen des Stators (10) auf die Paletten (12) zur Verfügung gestellt werden.

4. Produktionslinie für Statoren für Elektromotoren nach Anspruch 1, dadurch gekennzeichnet, daß mechanische Mittel (22-29) in der Nähe der Stationen (20) zur Statorbearbeitung zur Verfügung gestellt werden, zum Anheben der Paletten (12) zusammen mit den Statoren (10) von dem Förderbandmittel (13) zum Überführen der Paletten, so daß die jeweiligen Statoren in Positionen angeordnet werden, die mit den Stationen (20) zur Statorbearbeitung übereinstimmen, die sich entlang der Produktionslinie befinden.

5. Produktionslinie für Statoren für Elektromotoren nach Anspruch 4, dadurch gekennzeichnet, daß die mechanischen Mittel (22-29) folgendes beinhalten: einen Zylinder (22), der unter dem Förderbandmittel (13) positioniert ist, eine Kolbenstange (23), die durch den Zylinder (22) angetrieben wird und eine Gabel (24), die starr mit der Kolbenstange (23) und eingreifbar mit der Palette (12) verbunden ist, um die letztgenannte bei Betätigung des Zylinders (22) zu überführen.

6. Produktionslinie nach Anspruch 4 und 5, dadurch gekennzeichnet, daß die Gabel (24) ein Paar voneinander beabstandete Arme (25) aufweist, daß das Förderbandmittel (13) einen Rahmen (28) beinhaltet, der darin Führungen (26) aufweist, daß die Arme (25) der Gabel (24) in den Führungen (26) des Rahmens (28) des Förderbandmittels (13) gleiten und daß der Zylinder (22) starr mit dem Rahmen (28) verbunden ist.

7. Verfahren zur Herstellung von Statoren für Elektromotoren entlang einer Produktionslinie, eine Vielzahl von Stationen (20) zur Statorbearbeitung und in der Nähe befindlicher Förderbandmittel (13) beinhaltend zum Zuführen der Statoren (10) von Station zu Station; das Verfahren ist durch die folgende Verfahrensschritte gekennzeichnet:
a) Halten jedes Stators (10), dessen Achse horizontal ausgerichtet ist, auf einem wiegenförmigen Abschnitt eines hohlen Körpers (11) einer einzelnen Palette (12);
b) Positionieren der Palette (12) bezüglich der Stationen (20) zur Statorbearbeitung, mit dem befestigten Stator (10), dessen Achse horizontal und senkrecht zu der Bewegungsrichtung der Förderbandmittel ausgerichtet ist;
c) Bearbeiten des auf der Palette (12) befestigten Stators (10) in den Stationen (20) zur Statorbearbeitung.

8. Verfahren nach Anspruch 7, dadurch gekennzeichnet, daß wenigstens während des Verfahrensschrittes c) der Stator (10) starr an der Palette (12) durch Mittel (30) befestigt ist.

9. Verfahren nach Anspruch 7, dadurch gekennzeichnet, daß Verfahrensschritt b) durch Anheben der Palette (12) zusammen mit dem Stator von dem Förderbandmittel (13) zum Überführen der Palette (12) ausgeführt wird, so daß der jeweilige Stator (10) in einer Position angeordnet wird, die mit den Stationen (20) zur Statorbearbeitung übereinstimmt.

10. Verfahren nach Anspruch 7, dadurch gekennzeichnet, daß während des Verfahrensschrittes c) die Enden der Drahtwicklungen (17), die auf dem Stator (10) an einer der Stationen (20) zur Statorbearbeitung bearbeitet werden, vorübergehend an Fortsätzen (16) verankert werden, die sich von der Palette (12) ausgehend erstrecken.

## Revendications

1. Ligne de production de stators de moteurs électriques, laquelle ligne de production comporte une pluralité de stations de travail sur stator (20), ainsi qu'un moyen de convoyage à bande transporteuse (13) disposé à proximité des stations de travail sur stator (20) pour faire avancer les stators (10) de station de travail en station de travail; une pluralité de palettes (12) supportant individuellement lesdits stators (10) placés sur lesdites palettes pendant le déplacement desdits stators de station de travail en station de travail (20); ladite ligne de production étant caractérisée par le fait que le processus de production est appliqué aux stators (10) pendant qu'ils sont montés sur leurs palettes respectives (12), lesquelles palettes comportent un élément creux (11) ayant une partie en forme de berceau à l'intérieur de laquelle le stator (10) est placé avec son axe en position horizontale et perpendiculaire à la direction de déplacement du moyen de convoyage à bande transporteuse.

2. Ligne de production de stators de moteurs électriques selon la revendication 1, caractérisée par le fait que des appendices (16) sont prévus, qui saillent desdites palettes (12) pour recevoir temporairement les extrémités des enroulements de fil (17) bobinés sur le stator (10) dans une des stations de travail sur stator (20).

3. Ligne de production de stators de moteurs électriques selon la revendication 1, caractérisée par le fait qu'on a prévu des moyens (30) dans les stations de travail sur stator (20) pour fixer de manière rigide les stators (10) sur les palettes (12).

4. Ligne de production de stators de moteurs électriques selon la revendication 1, caractérisée par le fait qu'on a prévu des moyens mécaniques (22, 29) à proximité des stations de travail sur stator (20), pour lever les ensembles palette (12)/stator (10) de la bande transporteuse (13), afin d'imprimer une translation auxdits ensembles palette (12)/stator (10) de façon à ce que les stators (10) respectifs soient placés dans les positions correspondant aux stations de travail sur stator (20) réparties tout le long de la ligne de production.

5. Ligne de production de stators de moteurs électriques selon la revendication 4, caractérisée par le fait que lesdits moyens mécaniques (22, 29) comprennent un vérin (22) placé en-dessous du moyen de convoyage à bande transporteuse (13), une tige (23) actionnée par le vérin, et une fourche (24) connectée de manière rigide à ladite tige (23) et qui peut s'engager sous lesdites palettes (12) pour imprimer un mouvement de translation auxdites palettes (12) par actionnement du vérin (22).

6. Ligne de production selon la revendication 4 et selon la revendication 5, caractérisée par le fait qu'elle comporte une paire de bras distants l'un de l'autre (25), ledit moyen de convoyage à bande transporteuse (13) comporte un bâti (28) ayant des guides (26) à l'intérieur, lesdits bras (25) de la fourche (24) coulissant à l'intérieur desdits guides (26) du bâti (28) du moyen de convoyage à bande transporteuse (13), et ledit vérin (22) étant fixé de manière rigide audit bâti (28).

7. Procédé de traitement de stators de moteurs électriques le long d'une ligne de production comprenant une pluralité de stations de travail sur stator (20) opérant dans ladite ligne de production, et un moyen de convoyage à bande transporteuse (13) disposé à proximité des stations de travail sur stator (20) pour faire avancer les stators (10) de station de travail en station de travail; ledit procédé étant caractérisé par les étapes suivantes:
(a) chaque stator (10) est supporté sur une partie en forme de berceau d'un élément creux (11) avec son axe dirigé horizontalement sur chaque palette respective (12);
(b) positionnement de ladite palette (12) par rapport aux stations de travail sur stator (20), les stators (10) étant montés avec leur axe en position horizontale et perpendiculaire à la direction d'avancement du moyen de convoyage à bande transporteuse;
(c) traitement dudit stator (10) monté sur ladite palette (12) auxdites stations de travail sur stator (20).

8. Procédé selon la revendication 7, caractérisé par le fait qu'au moins au cours de l'étape (c), le stator (10) est fixé de manière rigide à la palette (12) par un moyen associé (30).

9. Procédé selon la revendication 7, caractérisé par le fait que la phase (b) consiste à lever l'ensemble palette (12)/stator (10) fixé sur ladite palette du moyen de convoyage à bande transporteuse (13) pour imprimer une translation à ladite palette, de façon à ce que le stator (10) fixé sur ladite palette soit placé dans des positions correspondant aux stations de travail sur stator (20).

10. Procédé selon la revendication 7, caractérisé en ce sens que pendant l'étape (c), les extrémités des enroulements de fil (17) bobinés sur le stator (10) dans une desdites stations de travail sur stator (20) sont temporairement ancrés sur des appendices (16) saillant desdites palettes.
